Europäisches Patentamt

European Patent Office

Office européen des brevets

(19)

(11) Publication number: **0 130 717**
**B1**

# (12) EUROPEAN PATENT SPECIFICATION

(45) Date of publication of patent specification: **30.03.88**

(51) Int. Cl.⁴: **H 04 N 17/02**

(21) Application number: **84304008.0**

(22) Date of filing: **14.06.84**

(54) **Apparatus for displaying the phase and amplitude of a chrominance signal.**

(30) Priority: **15.06.83 US 504569**

(43) Date of publication of application:
**09.01.85 Bulletin 85/02**

(45) Publication of the grant of the patent:
**30.03.88 Bulletin 88/13**

(84) Designated Contracting States:
**DE FR GB NL**

(56) References cited:
**CH-A- 516 164**
**DE-B-1 149 742**
**US-A-3 502 937**
**US-A-3 614 304**

(73) Proprietor: **TEKTRONIX, INC.**
**Tektronix Industrial Park D/S Y3-121 4900 S.W.**
**Griffith Drive P.O. Box 500**
**Beaverton Oregon 97077 (US)**

(72) Inventor: **Matney, Earl G.**
**2001 Oak Drive**
**Newberg Oregon 97132 (US)**

(74) Representative: **Baillie, Iain Cameron et al**
**c/o Ladas & Parry Isartorplatz 5**
**D-8000 München 2 (DE)**

Courier Press, Leamington Spa, England.

# Description

This invention relates to apparatus for displaying the phase and amplitude of a chrominance signal.

## Background of the Invention

It is conventional to use a vectorscope such as a Tektronix Inc. 1420 Series Vectorscope, including a cathode ray tube (CRT) to display in polar coordinates the phase and amplitude of a chrominance signal, the amplitude of the signal being represented by the radial coordinate and the phase relative to burst being represented by the angular coordinate. A consequence of this display format is that the light dot of the CRT remains at the same position on the CRT screen if the amplitude of the chrominance signal is zero, or below some small value, regardless of the value of the relative phase. Consequently, when the duty cycle of the display is low, or the signal is predominately of low amplitude, the center spot is by far the brightest area of the display. This leads to problems in use, such as poor viewability and difficulty in identifying the precise location of the center dot owing to haloing, and also gives rise to the danger that the phosphor of the CRT might be damaged.

It is an object of this invention to mitigate the foregoing disadvantages.

## Summary of the Invention

According to the present invention there is provided an apparatus for displaying in polar coordinates the relative phase and amplitude of a chrominance signal, the apparatus having a display device with a display surface, means for generating a light dot in two predetermined, mutually perpendicular directions over the display surface in such manner that, regardless of relative phase, the light dot remains at the same position if the amplitude of the chrominance signal is less than a predetermined value, and intensity adjusting means for adjusting the intensity of the light dot, characterised by:

means for generating a blanking signal and applying it to the intensity adjusting means of the display device when the amplitude of the chrominance signal is less than said predetermined value.

## Brief Description of the Drawings

For a better understanding of the invention, and to show how the same may be carried into effect, reference will now be made, by way of example, to the accompanying drawing, in which:

FIG. 1 is a block diagram of a vectorscope, and

FIG. 2 illustrates waveforms obtained at various points of FIG. 1.

## Detailed Description

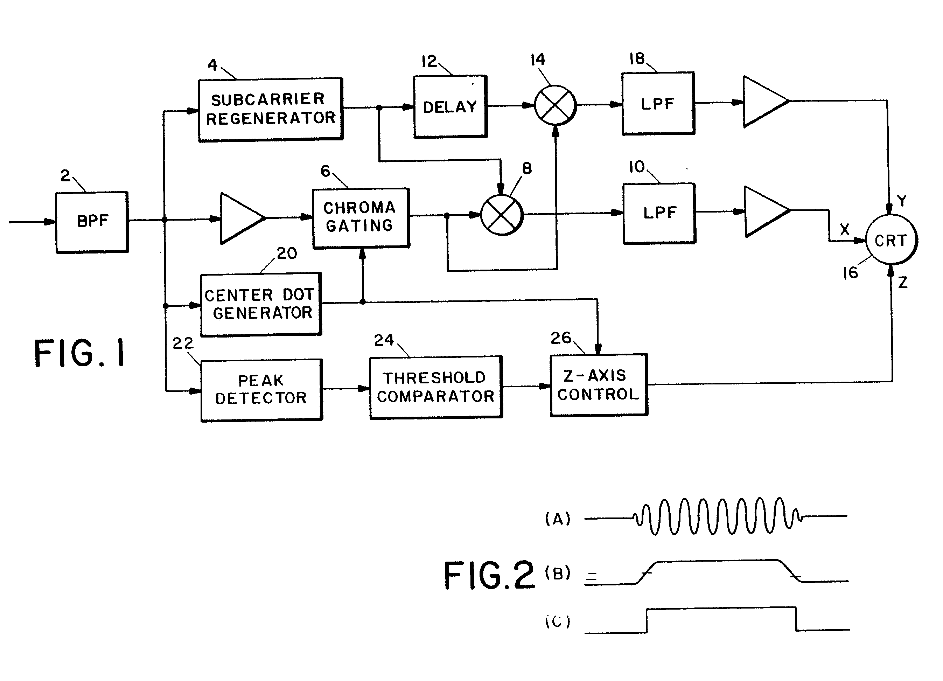

The vectorscope illustrated in FIG. 1 comprises a bandpass filter 2 which is tuned to the frequency of the color subcarrier and thus selects the chrominance frequency from an input video signal. The output of the bandpass filter 2 is applied in conventional manner to a subcarrier regenerator 4 which locks to the color burst of the video signal and generates a continuous wave signal synchronized with burst. The chrominance signal is in addition applied through a chroma gating circuit 6 to a demodulator 8 which receives the regenerated burst signal and provides at its output the demodulated chrominance signal. The demodulated chrominance signal is passed through a low pass filter 10 to the horizontal deflection amplifier of a CRT 16. The output of the subcarrier regenerator 4 is delayed by 90° (one-quarter period of the burst signal) by a delay line 12 and is applied to a second demodulator 14 which also receives the output signal of the chroma gating circuit 6. The output signal of the demodulator 14 represents the phase of the chrominance signal relative to burst, and is applied to the vertical deflection amplifier of the CRT 16 through a low pass filter 18.

The chroma gating circuit 6 operates under control of a center dot generator circuit 20 to provide a center dot in the event that the input signal is a continuous wave signal, i.e., one in which there is no interval during which the amplitude of the chrominance signal is zero. The center dot is provided by repeatedly grounding the output of the chroma gating circuit 6 independently of the amplitude of the input signal. The timing for the grounding operation is established by the circuit 20.

The output of the filter 2 is also applied to a peak detector 22 which provides at its output a signal which follows the envelope of the input signal. The peak detector is designed to respond rapidly to increasing amplitude of chrominance and slowly to decreasing amplitude of chrominance. The envelope signal provided by the peak detector 22 is applied to a threshold comparator 24. The output signal of the threshold comparator goes high when the envelope signal increases through a first threshold level and goes low when the envelope signal falls below a second, lower threshold value. Thus, the comparator 24 introduces hysteresis into the output of the peak detector.

The output of the threshold comparator 24 is applied to a Z-axis control circuit 26, which controls the beam current of the CRT 16. Beam current is provided to the CRT so long as the output signal of the threshold comparator is high. The Z-axis control circuit also responds to the center dot generator circuit 20 to insure that the center dot is not completely blanked. Thus, the circuit 20 repeatedly overrides the output of the threshold comparator 24 and thereby insures that the CRT display includes a center dot, but the dot is much fainter than it would be if the peak detector and threshold comparator were omitted.

The rapid response of the peak detector to increasing amplitude of chrominance, together with the delay introduced by the low pass filters, insures that unblanking takes place in time to view vector transitions.

FIG. 2 illustrates in simplified form the manner of operation of the peak detector and threshold comparator. The waveform A illustrated in FIG. 2 represents the input to the peak detector during the back porch of the horizontal synchronizing interval of a composite video signal, and thus includes the color burst. The waveform B represents the envelope signal provided at the output of the peak detector, while the waveform C represents the output of the threshold comparator. The first and second threshold levels are shown in FIG. 2 against the waveform B.

## Claims

1. An apparatus for displaying in polar coordinates the relative phase and amplitude of a chrominance signal, the apparatus having a display device (16) with a display surface, means (X, Y) for generating a light dot in two predetermined, mutually perpendicular directions over the display surface in such manner that, regardless of relative phase, the light dot remains at the same position if the amplitude of the chrominance signal is less than a predetermined value, and intensity adjusting means (26) for adjusting the intensity of the light dot, characterised by:
   means for generating a blanking signal (22, 24) and applying it to the intensity adjusting means (26) of the display device when the amplitude of the chrominance signal is less than said predetermined value.

2. An apparatus according to claim 1, wherein the means for generating the blanking signal comprises:
   a peak detector (22) for generating a signal representing the envelope of the chrominance signal; and
   a threshold comparator (24) for receiving the envelope signal and providing said blanking signal to the adjusting means (26) of the display device (16).

3. An apparatus according to claim 2, wherein the display device (16) includes a center dot generator circuit (20) which is operative to override repeatedly the blanking signal so as to insure that the light dot is not fully blanked when the chrominance signal is less than said predetermined value.

## Patentansprüche

1. Vorrichtung zur sichtbaren Darstellung der relativen Phasenlage und der Amplitude eines Farbartsignals in Polarkoordinaten, mit einer Sichtanzeigeeinrichtung (16), die eine Sichtanzeigefläche besitzt, ferner mit einer Einrichtung (X, Y) zum Erzeugen eines Lichtpunktes, der sich in zwei vorherbestimmten, zueinander rechtwinkligen Richtungen auf der Sichtanzeigefläche bewegt und der unabhängig von der relativen Phasenlage an derselben Stelle bleibt, wenn die Amplitude des Farbartsignals unter einem vorherbestimmten Wert liegt, und einer Intensitätseinstelleinrichtung (26) zum Einstellen der Intensität des Lichtpunktes, gekennzeichnet durch:
   eine Einrichtung zum Erzeugen eines Austastsignals (22, 24) und zum Anlegen desselben an die Intensitätseinstelleinrichtung (26) der Sichtanzeigeeinrichtung, wenn die Amplitude des Farbartsignals kleiner ist als der vorherbestimmte Wert.

2. Vorrichtung nach Anspruch 1, dadurch gekennzeichnet, daß die Einrichtung zum Erzeugen des Austastsignals umfaßt:
   einen Spitzenwertdetektor (22) zum Erzeugen eines Signals, das die Hüllkurve des Farbartsignals darstellt, und
   einen Schwellenwertvergleicher (24) zum Empfangen des Hüllkurvensignals und zur Abgabe des Austastsignals an die Sichtanzeigeeinrichtung (16).

3. Vorrichtung nach Anspruch 2, dadurch gekennzeichnet, daß die Sichtanzeigeeinrichtung (16) eine Mittelpunkts-Erzeugungsschaltung (20) umfaßt, die das Austastsignal wiederholt übersteuert, um zu gewährleisten, daß der Lichtpunkt nicht vollständig ausgetastet wird, wenn das Farbartsignal unter dem vorherbestimmten Wert ist.

## Revendications

1. Appareil de visualisation en coordonnées polaires de la phase relative et de l'amplitude d'un signal de chrominance, l'appareil comportant un dispositif de visualisation (16) avec une surface de visualisation, des moyens (X, Y) pour produire sur la surface de visualisation un point lumineux défini par deux directions prédéterminées perpendiculaires entre elles, de manière que, indépendamment de la phase relative, le point lumineux reste au même emplacement si l'amplitude du signal de chrominance est inférieure à une valeur prédéterminée, et des moyens de réglage d'intensité (26) pour régler l'intensité du point lumineux, caractérisé par:
   des moyens pour produire un signal de suppression (22, 24) et pour l'appliquer aux moyens de réglage d'intensité (26) du dispositif de visualisation quand l'amplitude du signal de chrominance est inférieure à ladite valeur prédéterminée.

2. Appareil selon la revendication 1, dans lequel les moyens pour produire le signal de suppression comportent:
   un détecteur de crête (22) pour produire un signal représentant l'enveloppe du signal de chrominance; et
   un comparateur de seuil (24) pour recevoir le signal enveloppe et fournir ledit signal de suppression aux moyens de réglage (26) du dispositif de visualisation (16).

3. Appareil selon la revendication 2, dans lequel le dispositif de visualisation (16) com porte un circuit (20) générateur de point central qui agit pour maîtriser de façon répétitive le signal de suppression, de manière à assurer que le point lumineux ne soit pas complètement supprimé quand le signal de chrominance est inférieur à ladite valeur prédéterminée.

FIG. 1

FIG.2

(A)

(B)

(C)

0 130 717